# EUROPÄISCHE PATENTSCHRIFT

(11) **EP 2 103 192 B1**
(45) Veröffentlichungstag und Bekanntmachung des Hinweises auf die Patenterteilung: **13.03.2013**
(21) Anmeldenummer: 07703944.4
(22) Anmeldetag: 17.01.2007
(51) Int. Cl.: H05B 41/282

(54) **SCHALTUNGSANORDNUNG UND VERFAHREN FÜR DIE ZÜNDUNG UND DEN BETRIEB EINER ODER MEHRERER ENTLADUNGSLAMPEN**
CIRCUIT ARRANGEMENT AND METHOD FOR STARTING AND OPERATING ONE OR MORE DISCHARGE LAMPS
MONTAGE ÉLECTRIQUE ET PROCÉDÉ POUR ALLUMER ET FAIRE FONCTIONNER UNE OU PLUSIEURS LAMPES À DÉCHARGE

(43) Veröffentlichungstag der Anmeldung: 23.09.2009
(73) Patentinhaber: OSRAM GmbH, 81543 München (DE)
(72) Erfinder: SCHMITT, Harald, 80689 München (DE)
(86) Internationale Anmeldenummer: PCT/EP2007/050447
(87) Internationale Veröffentlichungsnummer: WO 2008/086892

(56) Entgegenhaltungen:
- EP-A- 1 359 791
- EP-A1- 0 417 315
- US-A1- 2005 116 662

## Beschreibung

### Technisches Gebiet

Die vorliegende Erfindung bezieht sich auf eine Schaltungsanordnung für Entladungslampen, hauptsächlich solche Entladungslampen, die vorheizbare Elektroden aufweisen. Die Erfindung bezieht sich auch auf ein Verfahren für die Zündung und den Betrieb einer Entladungslampe.

Elektronische Vorschaltgeräte für Entladungslampen haben sich aufgrund ihrer bekannten Vorteile wie höhere Lichtausbeute und bessere Effizienz in jüngerer Zeit stark durchgesetzt. Übliche Niederdruck-Entladungslampen haben Heizwendeln als Elektroden ausgebildet, die vor dem Lampenstart beheizt werden (sog. Vorheizung) um so ihre E-missionsfähigkeit und damit die Zündwilligkeit der Lampe zu steigern. Um eine gute Beheizung der Wendeln sicherzustellen, haben sich im Stand der Technik verschiedene Schaltungsvarianten durchgesetzt.

### Stand der Technik

Bevor die Lampe betrieben werden kann, muss sie durch eine relativ hohe Spannung gezündet werden. Hierzu findet in vielen Fällen eine Resonanzanregung des Lampenresonanzkreises Verwendung. Bei Entladungslampen mit vorheizbaren Elektroden werden die Elektroden zunächst für eine bestimmte Zeit vorgeheizt, bevor die eigentliche Zündspannung angelegt wird. Eine ähnliche Regelung ist aus EP-A-417315 (Toschiba) bekannt. Die Vorheizzeit wird dabei durch eine Lampenwendelheizregelung bestimmt, die in vielen Fällen den Resonanzkreis bedämpft und/oder verstimmt und somit die Spannung niedrig hält wobei gleichzeitig ein Strom durch die Lampenwendeln fließt.

Eine einfache und verbreitete Variante, die Vorheizung sicherzustellen ist eine Schaltung, bei der ein Kaltleiter parallel zur Lampe und zum Resonanzkondensator geschaltet ist. Wenn das elektronische Vorschaltgerät eingeschaltet wird und der Wechselrichter anläuft, so leitet der Kaltleiter zunächst und lässt einen Vorheizstrom durch die Elektroden fließen. Durch den Vorheizstrom erwärmt sich der Kaltleiter selbst auch und wird schließlich hochohmig. Damit wird der Schwingkreis, der für die Lampenzündung zuständig ist nur noch schwach bedämpft und kann eine genügend hohe Zündspannung aufbauen, die die Lampe zündet.

Eine verbesserte Variante dieser Schaltung ist in der DE 41 29 430 A1 angegeben. Hier ist der Resonanzkondensator zweigeteilt und der Kaltleiter parallel zu einem Teil des Resonanzkondensators geschaltet. Dies hat den Vorteil, dass die Frequenz während der Vorheizung näher an der Resonanzfrequenz liegt und somit ein höherer Vorheizstrom fließt, was die Vorheizzeit verringert.

Beide Schaltungen haben den Nachteil, dass durch den Kaltleiter während der ganzen Betriebsdauer ein Strom fließt, um ihn zu beheizen, damit er hochohmig bleibt. Daher verursacht er eine Verlustleistung von ca. 0,5 - 1 Watt, was die Effizienz und den Wirkungsgrad des gesamten elektronischen Vorschaltgerätes verringert. Ein weiterer Nachteil ist die lange Abkühlzeit des Kaltleiters, die eine ungenügende Vorheizung der Lampenelektroden bei kurz ausgeschalteter Lampe nach sich zieht.

Aus der DE 44 25 859 A1 ist eine verbesserte Schaltung bekannt, die diese Nachteile nicht aufweist. Diese Schaltung bildet einen Kaltleiter nach, ohne dessen Nachteil der hohen Verlustleistung aufzuweisen. Im Grunde wird hier der Kaltleiter durch einen Transistor (Q3) mit Serienwiderstand (Z) nachgebildet. Während der Vorheizung wird der Transistor eingeschaltet und stellt eine ohmsche Last dar, die einen Vorheizstrom durch die Lampenelektroden treibt. Am Ende der Vorheizperiode wird der Transistor abgeschaltet um so die Zündung einzuleiten. Im abgeschalteten Zustand treten keine relevanten Verluste auf. Auch den Nachteil der unzureichenden Vorheizung bei kurzer Unterbrechung des Lampenbetriebs weist diese Schaltung nicht auf. Allerdings ist diese Schaltung, wie aus den Figuren der Schrift zu entnehmen ist, relativ aufwendig im Aufbau und damit kostenintensiv.

### Aufgabe

Es ist Aufgabe der vorliegenden Erfindung, eine Schaltung anzugeben, die eine gute Vorheizung der Lampenelektroden bietet, aber kostengünstiger herzustellen ist.

### Darstellung der Erfindung

Die Aufgabe wird gelöst durch eine Schaltungsanordnung nach dem Patentanspruch 1 und ein Verfahren nach dem Patentannspruch 8. Ausgegangen wird von einer Schaltungsanordnung mit einem freischwingenden Wechselrichter, wie er häufig in kosteneffektiven Vorschaltgeräten verwendet wird. Die Halbbrücke besitzt neben einer Zündspannungsbegrenzung eine zusätzliche Strombegrenzung des Schwingkreises, die für eine kostengünstige Vorheizung genutzt wird. Die Strombegrenzung wird bewerkstelligt durch einen zusätzlichen Regelwiderstand im Strompfad der Halbbrücke, der durch einen Transistor überbrückt werden kann. Mittels einer einfachen Schaltung wird der Transistor so angesteuert, dass eine Art Ablaufsteuerung für Vorheizung und Zündung bewerkstelligt wird. So wird in kostengünstiger Weise eine effektive Vorheizung der Lampenelektroden realisiert.

### Kurze Beschreibung der Zeichnung(en)

- Fig. 1: Eine erfindungsgemäße Schaltungsanordnung
- Fig. 2: Der Vorheiz/Lampenstrom und die Lampenspannung über der Zeit

### Bevorzugte Ausführung der Erfindung

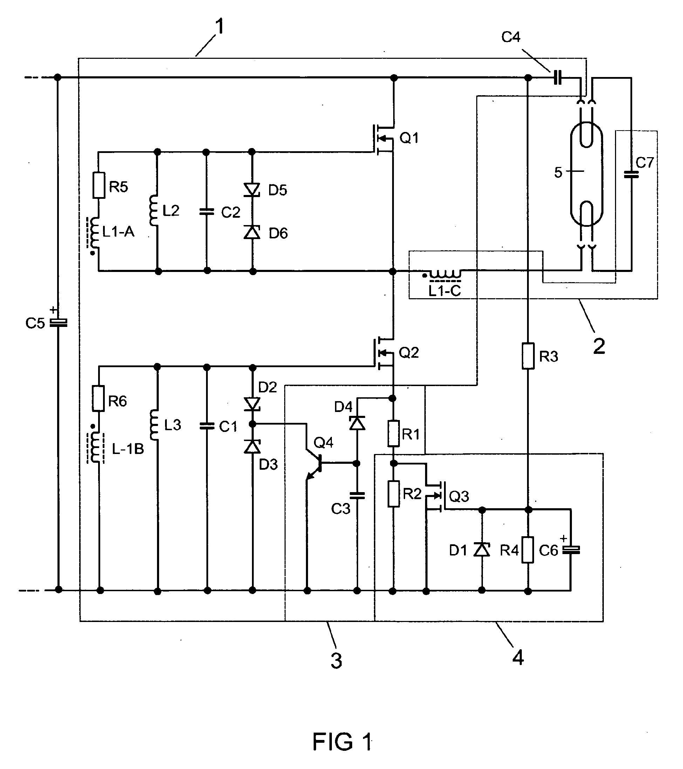

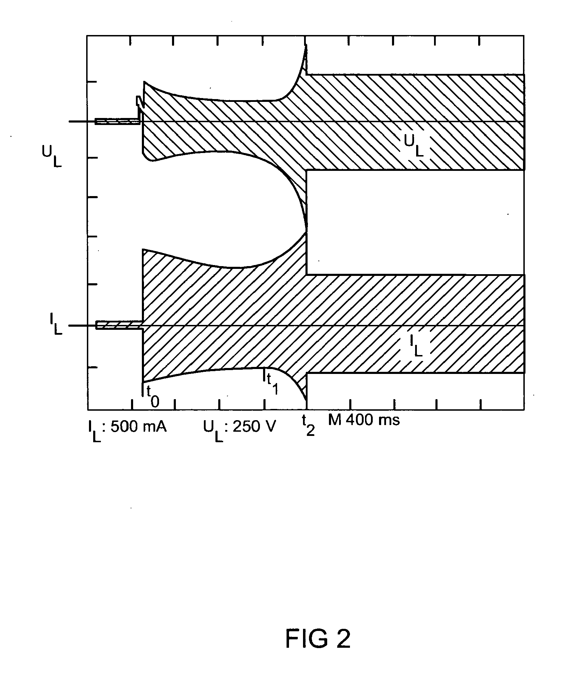

Fig. 1 zeigt eine erfindungsgemäße Schaltungsanordnung mit einem Wechselrichter (1), einem Resonanzkreis (2), einer Entladungslampe (5), einer Zündspannungsregelung (3) und der Lampenwendelheizregelung (4). Der Wechselrichter ist in dieser Figur ein Phasensteller, jedoch sind auch beliebige andere frei schwingende Wechselrichtertopologien möglich. Wie bei Freischwingern üblich gibt es ein Induktives Bauteil (L1) mit 3 Wicklungen, von denen eine als Lampendrossel (L1-C) dient und die 2 anderen (L1-A, L1-B) jeweils einen Halbbrückentransistor ansteuern. Die Lampendrossel ist zusammen mit einem Resonanzkondensator (C7) auch Teil eines Resonanzkreises (2). Die Zündspannungsregelung misst den Resonanzstrom in Form einer Spannung am Widerstand R1. Diese Spannung liegt an der Diode D4 an. Sobald diese Spannung höher ist als die Zenerspannung der Diode schaltet diese durch, und lädt den Kondensator C3 auf. Dieser hat eine recht kleine Kapazität, so dass die Kondensatorspannung schon bald über die Schaltspannung des Transistors Q4 steigt. Dieser schaltet durch, und schaltet den unteren Transistor ab. Durch diese Schaltung wird also im Takt der Resonanzfrequenz der Halbbrückentransistor verfrüht abgeschaltet, um damit auch die Resonanzspannung zu begrenzen. Im vorliegenden Ausführungsbeispiel passiert dies nur beim unteren Transistor, weshalb der Lastkreisstromfluss unsymmetrisch wird, wie aus der einhüllenden Stromkurve in Fig. 2 zu entnehmen ist. Es ist aber auch denkbar, diese Schaltung in beiden Halbbrückenästen vorzusehen um den Lastkreisstrom symmetrisch zu halten.

Die Lampenwendelheizregelung schließlich misst ebenfalls den Resonanzstrom in Form einer Spannung an den seriell geschalteten Widerständen R1 und R2 und schaltet im Takt der Resonanzfrequenz den unteren Transistor ab einer bestimmten gegenüber der Zündspannungsregelung niedrigeren Stromstärke ab um damit die Spannung über der Lampe stärker zu begrenzen. Dadurch werden die Lampenelektroden vorgeheizt, solange der Widerstand R2 ,aktiv' ist. Weil nun aufgrund der seriell geschalteten Widerstände die Spannung an der Zenerdiode D4 deutlich höher ist schaltet der Transistor Q4 deutlich früher als bei reiner Zündspannungsregelung durch und somit den Halbbrückentransistor früher ab. Daraus resultiert eine Erhöhung der Frequenz so dass hier auch die Frequenz nun deutlich über der Resonanzfrequenz liegt, was eine vorzeitige Lampenzündung mit zu kalten Elektroden noch besser vermeiden hilft.

Die Ablaufsteuerung von Vorheizung und Zündung wird durch die restlichen Bauteile der Lampenwendelheizregelung (4) realisiert. Durch den Widerstand R3 wird der Kondensator C6 aufgeladen. Übersteigt dessen Spannung die Schaltschwelle von Q3, so schaltet dieser ein und überbrückt den Widerstand R2. Damit wird die Regelung der Strombegrenzung im Wendelvorheizmodus gesperrt, und der Wechselrichter kann in seine Resonanz laufen. Dies funktioniert, weil durch das Überbrücken des Widerstandes R2 die Spannung an der Diode D4 nur noch über R1 erfolgt, und somit D4 erst bei höheren Strömen anspricht, woraufhin der Brückentransistor Q2 wieder länger eingeschaltet bleiben kann. Somit wird nach der Wendelvorheizung die Lampe gezündet, und der Wechselrichter kann nach der Zündung seinen normalen Betrieb aufnehmen. Durch die Wahl des Widerstandes R4 kann eine Verkürzung der Vorheizzeit nach kurzen Netzunterbrechungen eingestellt werden.

Dieser Ablauf von Vorheizung, Zündung und Betrieb ist aus Fig. 2 ersichtlich. Die untere Hüllkurve stellt den Lastkreisstrom I_{L} dar (Vorheizstrom von t₀-t₂, Lampenstrom >t₂), die obere die Spannung über der Lampe U_{L}. Zum Zeitpunkt t₀ wird der Wechselrichter eingeschaltet, der Transistor Q3 ist offen, und der Inverter befindet sich somit im Vorheizbetrieb. Durch das unsymmetrische ,Bremsen' der Halbbrücke ist auch der Vorheizstrom unsymmetrisch, was aus der gegenüber der Nulllinie nach ,oben' versetzten Hüllkurve hervorgeht. Zum Zeitpunkt t₁ schaltet der Transistor Q3 ein, die Halbbrücke läuft in die Resonanz, der Lastkreisstrom I_{L} und auch die Lampenspannung, die in der Kurve UL dargestellt ist steigen in der Folge stark an, bis die Lampe zum Zeitpunkt t₂ durchzündet. Ab hier ist auch die Zündspannüngsregelung nicht mehr aktiv, da die Betriebsströme deutlich kleiner sind als die Ansprechgrenze der Diode D4. Dadurch wird der Lampenstrom symmetrisch.

In folgender Tabelle ist beispielhaft eine Ausführungsform für eine 49W Leuchtstofflampe dargelegt. Hier ist die Diode D4 eine normale Siliziumdiode, die in Flussrichtung eingebaut wird, so dass als ,Zenerspannung' die Flussspannung der Diode benützt wird.

| Position | Wert | Position | Wert |
|---|---|---|---|
| C1 | 3, 9nF | L1 | 1, 9mH, 180:15:15 |
| C2 | 3, 9nF | L2 | 4, 7mH |
| C3 | 10nF | L3 | 4, 7mH |
| C4 | 220nF | Q1 | STB 3NC60 |
| C5 | 22µF | Q2 | STB 3NC60 |
| C6 | 10µF | Q3 | NDS351AN |
| C7 | 6,8nF | Q4 | BC847C |
| D1 | Zener-Diode 11V | R1 | 0,56 Ohm |
| D2 | Zener-Diode 18V | R2 | 3,3 Ohm |
| D3 | Zener-Diode 18V | R3 | 3, 6 MOhm |
| D4 | 1N4148 (andere Pol.) | R4 | 240 kOhm |
| D5 | Zener-Diode 18V | R5 | 3, 3 kOhm |
| D6 | Zener-Diode 18V | R6 | 3,3 kOhm |

Es versteht sich von selbst, dass die Schaltung auch auf andere Lampentypen angepasst werden kann, ohne von der erfindungsgemäßen Idee abzuweichen.

## Patentansprüche

1. Schaltungsanordnung für die Zündung und den Betrieb einer oder mehrerer Entladungslampen bestehend aus einem freischwingenden Wechselrichter (1), einem Resonanzkreis (2), einer Niederdruck-Entladungslampe (5), einer Zündspannungsregelung (3) mit einem Regelwiderstand (R1), und einer Lampenwendelheizregelung (4),
**dadurch gekennzeichnet, dass**
die Lampenwendelheizregelung über einen zusätzlichen Regelwiderstand (R2) im Resonanzkreis verfügt, der den im Resonanzkreis fließenden Vorheizstrom misst, und bei Überschreiten eines Schwellwertes mindestens einen Halbbrückentransistor (Q2) im Takt der Resonanzfrequenz verfrüht abschaltet und so den im Resonanzkreis fließenden Strom begrenzt, wobei dieser zusätzliche Regelwiderstand (R2) nach der Wendelvorheizung durch einen Schalter (Q3) überbrückt wird, um die Spannung an der Lampe zu erhöhen.

2. Schaltungsanordnung für die Zündung und den Betrieb einer oder mehrerer Entladungslampen nach Anspruch 1,
**dadurch gekennzeichnet, dass**
der Schalter (Q3) ein Feldeffekttransistor ist.

3. Schaltungsanordnung für die Zündung und den Betrieb einer oder mehrerer Entladungslampen nach einem der Ansprüche 1 oder 2,
**dadurch gekennzeichnet, dass**
der Schalter (Q3) beim Starten des Wechselrichters geöffnet ist.

4. Schaltungsanordnung für die Zündung und den Betrieb einer oder mehrerer Entladungslampen nach einem der vorhergehenden Ansprüche,
**dadurch gekennzeichnet, dass**
der Schalter (Q3) durch Laden eines Kondensators (C6) über einen Spannungsteiler (R3, R4) nach einer vorbestimmten Zeit eingeschaltet wird, um so den Regelwiderstand (R2) zu überbrücken.

5. Schaltungsanordnung für die Zündung und den Betrieb einer oder mehrerer Entladungslampen nach einem der vorhergehenden Ansprüche,
**dadurch gekennzeichnet, dass**
die Vorheizzeit der Lampenelektroden durch die Wahl der Widerstandswerte des Spannungsteilers (R3, R4) eingestellt werden kann.

6. Schaltungsanordnung für die Zündung und den Betrieb einer oder mehrerer Entladungslampen nach einem der vorhergehenden Ansprüche,
**dadurch gekennzeichnet, dass**
über die Wahl des Widerstandswertes des Widerstands R4 eine Verkürzung der Vorheizzeit nach kurzen Netzunterbrechungen eingestellt werden kann.

7. Schaltungsanordnung für die Zündung und den Betrieb einer oder mehrerer Entladungslampen nach einem der vorhergehenden Ansprüche,
**dadurch gekennzeichnet, dass**
die Vorheizzeit von der direkt vorhergegangenen Ausschaltdauer abhängt, und die Vorheizzeit aufgrund der Ausschaltdauer so gewählt wird, dass die Lampenelektroden immer mit der richtigen Vorheizenergie beaufschlagt werden.

8. Verfahren zur Zündung und den Betrieb einer oder mehrerer Entladungslampen mit einem freischwingenden Wechselrichter (1) in Halbbrückenschaltung, einem Resonanzkreis (2), einer Niederdruck-Entladungslampe (5), einer Zündspannungsregelung (3), und einer Lampenwendelheizregelung (4) mit einem Regelwiderstand (R2) zur Strombegrenzung und einem Überbrückungsschalter (Q3) **gekennzeichnet durch** folgende Schritte:
- Einschalten des Wechselrichters, wobei der Regelwiderstand (R2) den Strom im Resonanzkreis misst und bei Überschreiten eines Schwellwertes mindestens einen Halbbrückentransistor (Q2) im Takt der Resonanzfrequenz verfrüht abschaltet um so den im Resonanzkreis fließenden Strom zu begrenzen,
- Aufheizen der Lampenelektroden bei strombegrenztem Resonanzkreis,
- Abschalten der Strombegrenzung **durch** überbrücken des Regelwiderstandes mittels des Überbrückungsschalters
- Zünden der Lampe **durch** Einstellen der Wechselrichterresonanzfrequenz
- Betreiben der Lampe im stationären Zustand

## Claims

1. Circuit arrangement for starting and operating one or more discharge lamps comprising a self-oscillating inverter (1), a resonant circuit (2), a low-pressure discharge lamp (5), a starting voltage controller (3) with a variable resistor (R1), and a lamp filament heating controller (4), **characterized in that** the lamp filament heating controller has an additional variable resistor (R2) in the resonant circuit, which variable resistor measures the preheating current flowing in the resonant circuit, and, in the event of a threshold value being exceeded, prematurely disconnects, in clock with the resonant frequency, at least one half-bridge transistor (Q2) and thus limits the current flowing in the resonant circuit, this additional variable resistor (R2) being bypassed by a switch (Q3) after the filament preheating in order to increase the voltage across the lamp.

2. Circuit arrangement for starting and operating one or more discharge lamps according to Claim 1, **characterized in that** the switch (Q3) is a field effect transistor.

3. Circuit arrangement for starting and operating one or more discharge lamps according to either of Claims 1 and 2, **characterized in that** the switch (Q3) is open during starting of the inverter.

4. Circuit arrangement for starting and operating one or more discharge lamps according to one of the preceding claims, **characterized in that** the switch (Q3) is switched on by charging of a capacitor (C6) via a voltage divider (R3, R4) after a predetermined time in order thus to bypass the variable resistor (R2).

5. Circuit arrangement for starting and operating one or more discharge lamps according to one of the preceding claims, **characterized in that** the preheating time of the lamp electrodes can be set by selecting the resistance values of the voltage divider (R3, R4).

6. Circuit arrangement for starting and operating one or more discharge lamps according to one of the preceding claims, **characterized in that** it is possible to shorten the preheating time after brief interruptions to the power supply by virtue of the selection of the resistance value of the resistor R4.

7. Circuit arrangement for starting and operating one or more discharge lamps according to one of the preceding claims, **characterized in that** the preheating time depends on the directly preceding switch-off duration, and the preheating time is selected on the basis of the switch-off duration in such a way that the correct preheating energy is always applied to the lamp electrodes.

8. Method for starting and operating one or more discharge lamps with a self-oscillating inverter (1) in a half-bridge circuit, a resonant circuit (2), a low-pressure discharge lamp (5), a starting voltage controller (3) and a lamp filament heating controller (4) with a variable resistor (R2) for current limitation and a bypassing switch (Q3), **characterized by** the following steps:
- switching on the inverter, the variable resistor (R2) measuring the current in the resonant circuit, and, in the event of a threshold value being exceeded, prematurely disconnecting, in clock with the resonant frequency, at least on half-bridge transistor (Q2) in order to limit the current flowing in the resonant circuit,
- heating the lamp electrodes with current-limited resonant circuit,
- disconnecting the current limitation by bypassing the variable resistor by means of the bypassing switch,
- starting the lamp by setting the inverter resonant frequency,
- operating the lamp in the steady state.

## Revendications

1. circuit, pour l'allumage et le fonctionnement d'une ou de plusieurs lampes à décharge, constitué d'un onduleur à oscillations libres (1), d'un circuit de résonance (2), d'une lampe à décharge à basse pression (5), d'un dispositif de réglage de la tension d'allumage (3) muni d'une résistance de réglage (R1) et d'un dispositif de réglage du chauffage de filament de lampe (4),
**caractérisé en ce que**
le dispositif de réglage du chauffage de filament de lampe dispose d'une résistance de réglage supplémentaire (R2) qui mesure le courant de préchauffage circulant dans le circuit de résonance, et, en cas de dépassement d'une valeur seuil, déconnecte prématurément au moins un transistor en demi-pont (Q2) au rythme de la fréquence de résonance et limite ainsi le courant circulant dans le circuit de résonance, cette résistance de réglage supplémentaire (R2) étant pontée par un commutateur (Q3) après le préchauffage du filament de lampe afin d'augmenter la tension sur la lampe.

2. Circuit pour l'allumage et le fonctionnement d'une ou de plusieurs lampes à décharge selon la revendication 1,
**caractérisé en ce que**
le commutateur (Q3) est un transistor à effet de champ.

3. Circuit pour l'allumage et le fonctionnement d'une ou de plusieurs lampes à décharge selon l'une quelconque des revendications 1 ou 2,
**caractérisé en ce que**
le commutateur (Q3) est ouvert au démarrage de l'onduleur.

4. Circuit pour l'allumage et le fonctionnement d'une ou de plusieurs lampes à décharge selon l'une quelconque des revendications précédentes,
**caractérisé en ce que**
le commutateur (Q3) est connecté après un temps prédéfini en raison du chargement d'un condensateur (C6) par l'intermédiaire d'un diviseur de tension (R3, R4), afin de ponter ainsi la résistance de réglage (R2).

5. Circuit pour l'allumage et le fonctionnement d'une ou de plusieurs lampes à décharge selon l'une quelconque des revendications précédentes,
**caractérisé en ce que**
le temps de préchauffage des électrodes de lampe peut être réglé en sélectionnant les valeurs de résistance du diviseur de tension (R3, R4).

6. Circuit pour l'allumage et le fonctionnement d'une ou de plusieurs lampes à décharge selon l'une quelconque des revendications précédentes,
**caractérisé en ce qu'**
un raccourcissement du temps de préchauffage peut être réglé après de courtes interruptions de réseau en sélectionnant la valeur de résistance de la résistance R4.

7. Circuit pour l'allumage et le fonctionnement d'une ou de plusieurs lampes à décharge selon l'une quelconque des revendications précédentes,
**caractérisé en ce que**
le temps de préchauffage dépend de la durée de coupure directement précédente, et **en ce que** le temps de préchauffage, en raison de la durée de coupure, est sélectionné de manière à ce que les électrodes de lampe soient toujours alimentées avec la bonne énergie de préchauffage.

8. Procécé pour l'allumage et le fonctionnement d'une ou de plusieurs lampes à décharge, comprenant un onduleur à oscillations libres (1) en montage en demi-pont, un circuit de résonance (2), une lampe à décharge à basse pression (5), un dispositif de réglage de la tension d'allumage (3) et un dispositif de réglage du chauffage de filament de lampe (4) muni d'une résistance de réglage (R2) pour la limitation de courant et comprenant un commutateur de pontage (Q3), **caractérisé par** les étapes suivantes :
- connexion de l'onduleur, la résistance de réglage (R2) mesurant le courant dans le circuit de résonance et, en cas de dépassement d'une valeur seuil, déconnectant prématurément au moins un transistor en demi-pont (Q2) au rythme de la fréquence de résonance afin de limiter ainsi le courant circulant dans le circuit de résonance,
- échauffement des électrodes de lampe avec le circuit de résonance limite en courant,
- arrêt de la limitation de courant par pontage de la résistance de réglage au moyen du commutateur de pontage,
- allumage de la lampe par réglage de la fréquence de résonance de l'onduleur,
- fonctionnement de la lampe à l'état stationnaire.
